# FASCICULE DE BREVET EUROPEEN

(11) **EP 2 675 711 B1**
(45) Date de publication et mention de la délivrance du brevet: **22.06.2016**
(21) Numéro de dépôt: 12706647.0
(22) Date de dépôt: 30.01.2012
(51) Int. Cl.: B64D 31/04, B64D 11/00, B64D 43/00

(54) **PYLONE CENTRAL POUR COCKPIT D'AERONEF ET AERONEF COMPRENANT UN TEL PYLONE**
ZENTRALER PYLON FÜR EIN FLUGZEUGCOCKPIT UND FLUGZEUG MIT EINEM SOLCHEN PYLON
CENTRAL PYLON FOR AN AIRCRAFT COCKPIT AND AIRCRAFT COMPRISING SUCH A PYLON

(30) Priorité: 18.02.2011 FR 1151346
(43) Date de publication de la demande: 25.12.2013
(73) Titulaire: Airbus Operations, 31060 Toulouse (FR)
(72) Inventeur: GUERING, Bernard, F-31850 Montrabe (FR)
(74) Mandataire: Ilgart, Jean-Christophe
(86) Numéro de dépôt international: PCT/FR2012/050189
(87) Numéro de publication internationale: WO 2012/110725

(56) Documents cités:
- FR-A1- 2 939 766
- US-A- 3 675 880
- US-A1- 2010 050 803
- US-A1- 2010 078 533

## Description

### DOMAINE TECHNIQUE

L'invention concerne un pylône central pour cockpit d'aéronef et un aéronef comprenant un tel pylône.

Dans la suite, pour des raisons de simplification de la description, on considère un aéronef de type avion.

### ÉTAT DE LA TECHNIQUE ANTÉRIEURE

L'invention intervient dans un contexte de recherche d'amélioration globale des pointes avant d'avions. Dans ce cadre, tous les composants majeurs des cockpits sont concernés, notamment le pylône central, intégré généralement à l'ensemble des planches de bord et auvent.

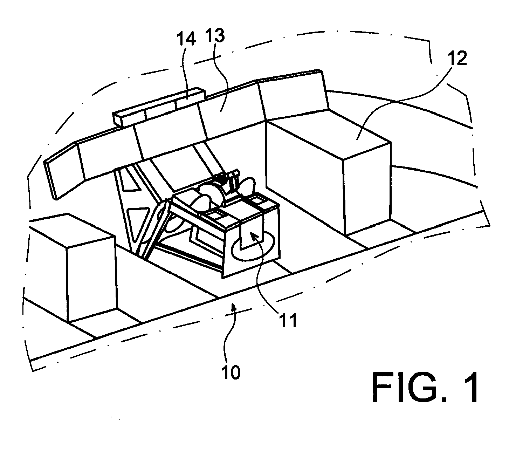

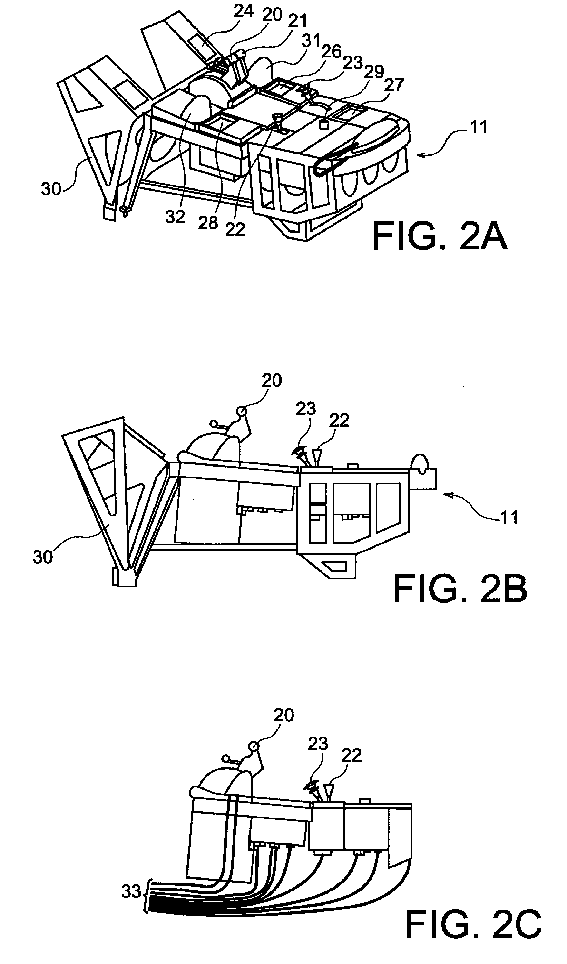

Un tel pylône central, qui est illustré sur la figure 1, est positionné sur le plancher du cockpit entre les deux pilotes. Dans le cockpit 10 sont notamment représentés le pylône central 11, les banquettes latérales 12, les planches de bord 13, l'auvent 14. Comme illustré sur les figures 2A, 2B et 2C, le pylône central 11 comprend un certain nombre d'équipements majeurs pour la conduite d'un avion, à savoir notamment :
- les commandes 20 et 21 de poussée des moteurs gauche et droit de l'avion,
- les commandes 22 et 23 de becs et volets,
- les commandes 24 de sortie du train d'atterrissage,
- les commandes de navigation et de radio,
- les moyens 26, 27, 28 de visualisation de type CDU (« Control Display Unit »),
- les moyens 31 et 32 de commande de pilotage de la fonction INTERNET,
- les moyens 29 de compensation de gouverne (« Trim »).

Ces équipements sont disposés sur un plan supérieur du pylône central 11 de façon très accessible pour les pilotes, en étant supportés par un châssis mécanique 30. Ces équipements sont fixés sur le pylône central de façon unitaire, par exemple par une vis située en chacun des coins de sa face avant. De plus, leurs alimentations électriques sont réalisées de façon individuelle et en général sur la base de connexions en fil à fil.

Le pylône de l'art antérieur, illustré sur les figures 2A, 2B et 2C, comprend de nombreux équipements disparates (leviers de commande, boîtiers électroniques, clavier...), fixés individuellement au châssis 30, un câblage 33 étant utilisé pour chacun de ces équipements. Le châssis 30 est un ensemble mécanique complexe, constitué d'une structure ajourée manquant de rigidité et fragilisé par le fait qu'il offre une intégration individuelle à chacun des équipements. L'intégration des équipements sur le châssis 30 est délicate (lourdeur, volume, rigidité). L'environnement des planches de bord 13 et de ce pylône 11 est très dense du fait que le câblage des équipements est malaisé et nécessite un accès par le plancher avant (trou d'homme) pour y accéder.

Un document de l'art antérieur, US 2010/0078533, qui est considéré l'état de la technique plus proche, décrit une console configurée pour soutenir plusieurs instruments, qui comprend un châssis, une plaque avant et un ou plusieurs connecteurs. Le châssis possède une face arrière et une face avant qui forment entre elles un angle supérieur à 180°. La face avant est couplée à la face avant du châssis et comprend une surface définissant une ouverture permettant à un câble de le traverser. Les connecteurs sont couplés à la face arrière du chassis. Chaque connecteur est prévu pour recevoir un conduit. Ce support peut être installé du côté cockpit d'un pylône central de cockpit d'aéronef.

L'invention a pour objet de pallier de façon radicale tous ces inconvénients en intégrant en un seul module un ensemble qui était jusqu'à présent constitué d'une multitude d'équipements disposés sur un châssis.

### EXPOSÉ DE L'INVENTION

L'invention concerne un pylône central de cockpit d'aéronef pour la fixation d'équipements de commande et de contrôle de cet aéronef tel que défini par les caractéristiques de la revendication 1. Ce pylône central comprend :
- un module équipements comprenant des commandes reliées à au moins un premier connecteur électrique,
- un châssis monobloc comprenant une face supérieure munie d'une cuvette comportant au moins un second connecteur électrique situé en fond de cuvetterelié à des calculateurs de bord de cet aéronef,dans laquelle vient s'installer ce module équipements, le au moins un premier connecteur électrique du module équipements venant s'insérer dans au moins un second connecteur électrique de manière à relier les commandes du module équipements et ces calculateurs de bord.

Avantageusement, le câblage de connexion du module équipements est un câblage multiplexé. Les premiers connecteurs électriques centralisés en face avant du module équipements sont insérés dans des seconds connecteurs électriques situés en fond de cuvette. Le châssis monobloc est réalisé en sandwich composite, par exemple en carbone Nida Nomex. Le châssis comprend :
- au moins deux, par exemple quatre, points d'attache en partie inférieure pour le fixer sur le plancher du cockpit.

Dans une variante de réalisation, le châssis comporte une face supérieure articulée, par exemple à l'aide de deux vérins latéraux. Le pylône central de l'invention permet alors de libérer un volume très appréciable dans la zone située en dessous ainsi que dans la zone morte avant.

Il existe beaucoup de possibilités pour exploiter le volume ainsi généré :
- intégration sous le pylône central d'un strapontin pliable à usage d'un observateur central,
- intégration de bouteilles d'oxygène dédiées au cockpit,
- intégration d'un module système, par exemple d'un petit coeur électrique de secours ou d'une petite baie avionique de secours (emplacement optimisé vis-à-vis des risques dans cette zone),
- intégration d'un coffre de rangement dédié à l'équipage, ce coffre pouvant être extrait par l'arrière via des glissières ou des roulettes,
- intégration d'une glacière réfrigérée amovible ou d'une toilette,
- stockage d'un sac ou de petites valises.

### BRÈVE DESCRIPTION DES DESSINS

La figure 1 illustre un pylône central de l'art antérieur disposé dans le cockpit d'un avion,
- les figures 2A à 2C illustrent un pylône central de l'art antérieur,
- les figures 3A à 3D illustrent le pylône central de l'invention comprenant un module équipements 40 et un châssis 41 support de celui-ci,
- les figures 4A à 4C illustrent le châssis du pylône central de l'invention,
- la figure 5 illustre l'intégration du module équipements 40 sur le châssis 41, dans le pylône central de l'invention,
- la figure 6 illustre le gain de place permis par le pylône central de l'invention,
- les figures 7A à 7C illustrent une variante de réalisation du pylône central de l'invention.

### EXPOSÉ DÉTAILLÉ DE MODES DE RÉALISATION PARTICULIERS

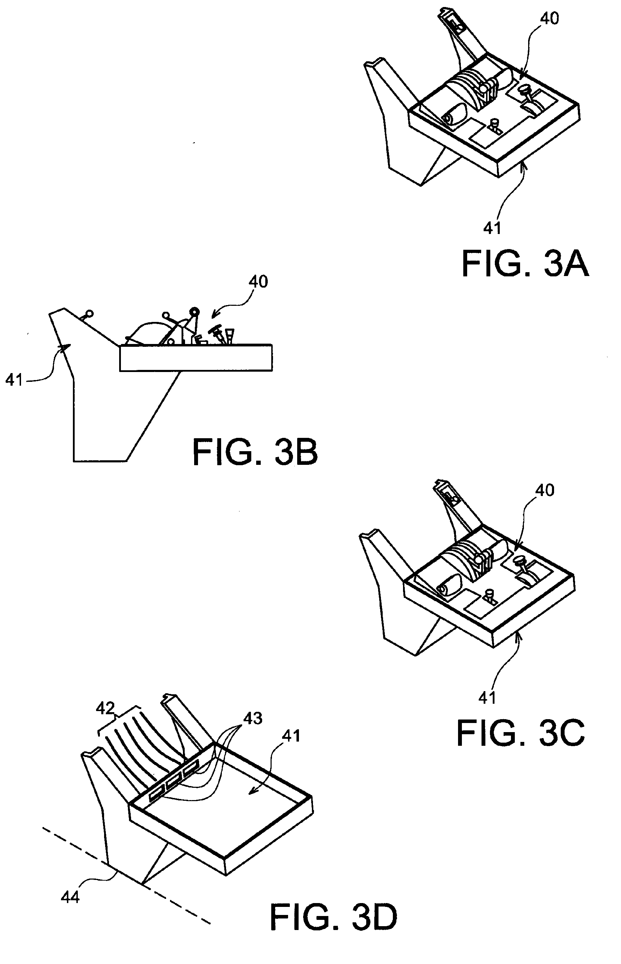

Le pylône central de l'invention, illustré sur les figures 3A à 3D, présente les caractéristiques suivantes :
- les équipements sont regroupés en un module équipements unique 40, par exemple de forme parallélépipédique, ayant la particularité d'intégrer des équipements principalement mécaniques ainsi que des équipements électriques,
- le module équipements 40 est intégré dans une cuvette 45, par exemple de forme parallélépipédique, formée dans la partie supérieure d'un châssis support 41, par exemple horizontale, via un dispositif d'insertion rapide (seconds connecteurs électriques 43),
- le module équipements fait appel majoritairement à un principe de câblage multiplexé pour réduire les câblages 42 de façon importante,
- le châssis support 41, qui repose sur le plancher 34 du cockpit, est réalisé de façon monobloc, par exemple en sandwich composite, offrant une très bonne rigidité associée à une masse faible.

Le module équipements 40 est constitué d'un élément unique disposant avantageusement de premiers connecteurs électriques 58 centralisés en face avant permettant d'assurer une connexion de type « Racking », par exemple avec insertion automatique de ces premiers connecteurs du fait d'un guidage et d'un verrouillage adéquat. Ce module équipements privilégie une technologie électrique de type bus numérique favorisant une extrême réduction de câblages. Ce module équipements 40 forme un boitier unique, dans lequel chaque commande est reliée par des signaux multiplexés à des calculateurs avion, qui forment des interfaces entre ces boitiers et les systèmes avion, les fonctions remplies par les équipements du pylône de l'art antérieur étant déportées dans ces calculateurs. Ce module équipements 40 permet de réaliser des gains importants notamment en termes de masse, thermique, câblage, coût, rigidité, intégration avion.

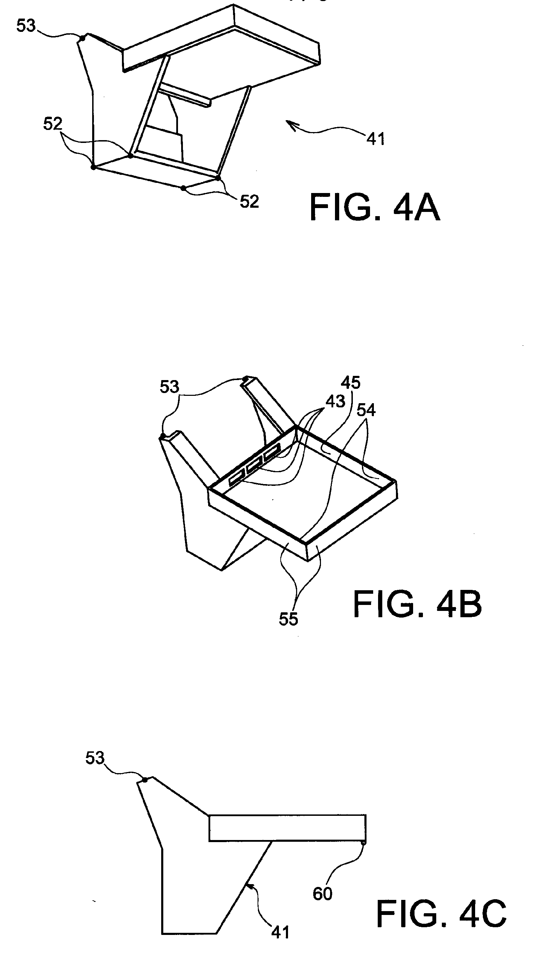

Le châssis 41, illustré sur les figures 4A à 4C, est réalisé en une seule pièce en sandwich composite, par exemple en carbone Nida Nomex, qui assure une grande rigidité pour une faible masse.

Ce châssis 41 comprend :
- au moins deux, par exemple, quatre points d'attache 52 en partie inférieure pour le fixer sur le plancher du cockpit,
- au moins deux points d'attache 53 en partie supérieure pour se fixer sur les planches de bord du cockpit,
- une face supérieure, par exemple horizontale, comprenant une cuvette 45, apte à recevoir le module équipements 40, comprenant avantageusement :
   - des seconds connecteurs électriques d'insertion 43, assurant la fonction du module équipements 40 après insertion électrique,
   - deux zones renforcées 54,
   - une protection 55 contre les chocs réalisée par un surmoulage sur le pourtour de cette face horizontale.

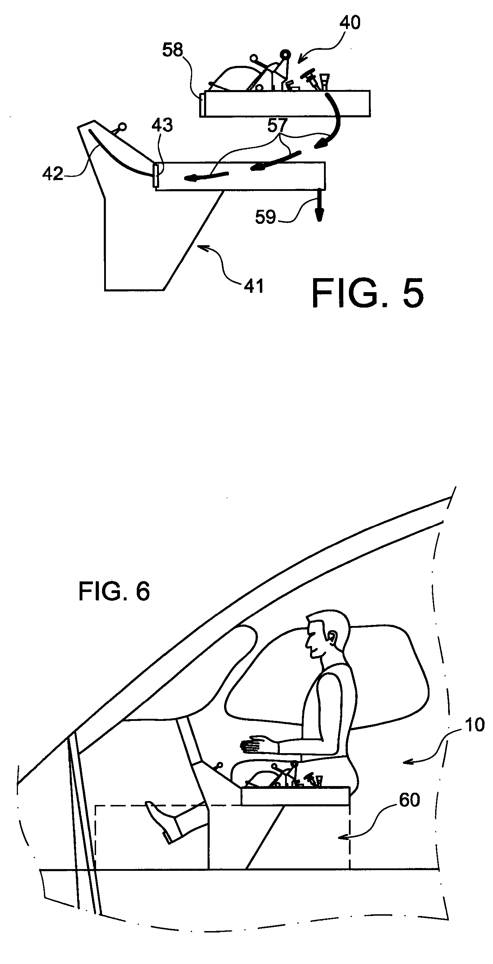

La figure 5 illustre la fixation du module équipement 40 sur le châssis 41, la trajectoire d'insertion étant représentée par les flèches 57. Cette fixation comprend tout d'abord le branchement des premiers connecteurs électriques 58 du module équipements 40 dans les seconds connecteurs électriques 43 du châssis, puis le verrouillage final 59 du module équipements 40 dans la cuvette 45 de la face supérieure du châssis 41, par exemple en utilisant deux vis traversantes 59 situées sous la partie horizontale du châssis 41.

L'invention permet de libérer un volume 60 très appréciable sous le pylône central ainsi que dans la zone morte avant, comme illustré sur la figure 6.

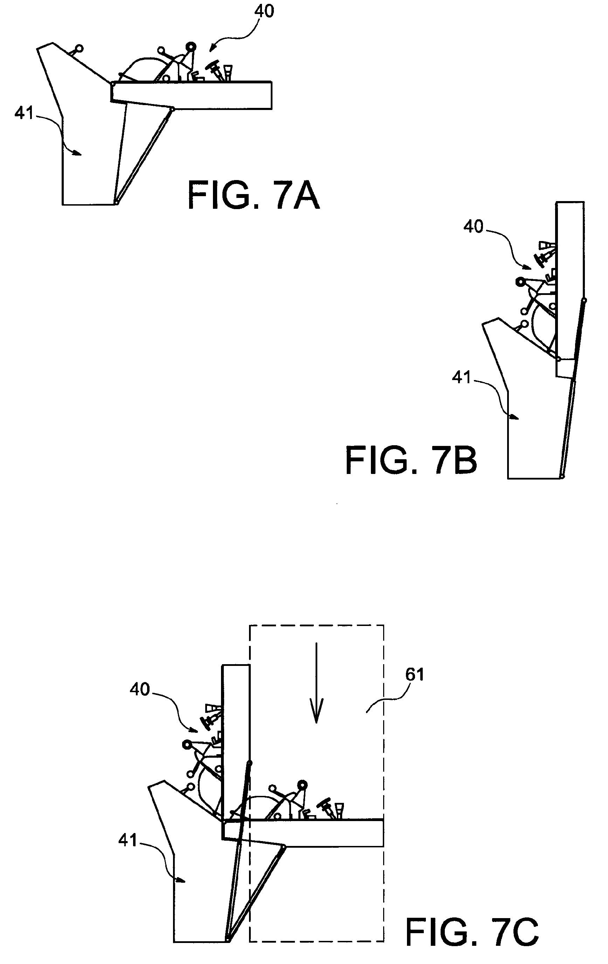

Dans une variante de l'invention, la face supérieure du châssis 41 supportant le module équipements 40 est articulée à l'aide de deux vérins disposés latéralement, non représentés sur les figures. L'opération de relèvement de cette face supérieure peut être réalisée manuellement. Dans ce cas, après déverrouillage des sécurités on relève cette face supérieure jusqu'à une butée haute. Les vérins ne sont là que pour le guidage et l'assistance en terme d'effort (principe des vérins d'assistance des hayons de voiture). Les figures 7A, 7B, 7C illustrent ainsi cette face supérieure du pylône central de l'invention, respectivement dans une position baissée, dans une position relevée, et dans une superposition de ces deux positions, ce qui permet d'illustrer le gain d'accès 61.

Mais cette opération de relèvement de la face supérieure peut aussi être réalisée automatiquement, via un système hydro-électrique par exemple.

L'intérêt principal de cette variante est de dégager plus d'espace, de permettre de meilleurs accès du haut vers le bas pour intégrer des aménagements dans le plancher sous le pylône central, de faciliter la maintenabilité vers l'avant, et éventuellement de favoriser l'accès aux sièges pilotes.

## Revendications

1. Pylône central de cockpit d'aéronef pour la fixation d'équipements de commande et de contrôle de cet aéronef, **caractérisé en ce que** ce pylône central comprend :
- un module équipements (40) formant un boîtier unique intégrant ces éléments de commande et de contrôle et disposant de premiers connecteurs électriques (58), centralisés en face avant, reliés à ces équipements,
- un châssis support monobloc (41) comprenant une face supérieure munie d'une cuvette (45) comportant de seconds connecteurs électriques (43) situés au fond de cette cuvette aptes à être reliés à des calculateurs de bord de cet aéronef, dans laquelle vient s'installer ce module équipements (41) de manière à assurer la fonction de ce module équipements (41) après insertion des premiers connecteurs électriques (58) dans les seconds connecteurs électriques (43), et relier les commandes du module équipements et les calculateurs de bord.

2. Pylône central selon la revendication 1, dans lequel le câblage de connexion du module équipements (40) est un câblage multiplexé.

3. Pylône central selon la revendication 1, dans lequel les premiers connecteurs électriques (58), centralisés en face avant du module équipements (40), sont insérés dans des seconds connecteurs électriques (43) situés en fond de cuvette (45).

4. Pylône central selon la revendication 1, dans lequel le châssis monobloc (41) est réalisé en sandwich composite.

5. Pylône central selon la revendication 4, dans lequel le sandwich composite est du carbone Nida Nomex.

6. Pylône central selon la revendication 1, dans lequel le châssis comprend :
- au moins deux points d'attaches (52) en partie inférieure pour le fixer sur le plancher du cockpit,
- au moins deux points d'attache (53) en partie supérieure pour se fixer sur les planches de bord du cockpit.

7. Pylône central selon l'une quelconque des revendications précédentes, dans lequel la face supérieure du chassis monobloc est articulée.

8. Pylône central selon la revendication 7, dans lequel la face supérieure du châssis est articulée à l'aide de deux vérins latéraux.

9. Pylône central selon l'une quelconque des revendications précédentes, qui est utilisé dans un avion.

10. Aéronef comprenant un pylône central selon l'une quelconque des revendications 1 à 8.

## Patentansprüche

1. Zentraler Pylon für ein Flugzeugcockpit für die Befestigung von Ausrüstungen zur Steuerung und Kontrolle dieses Flugzeugs, **dadurch gekennzeichnet, dass** dieser zentrale Pylon Folgendes aufweist:
- ein Ausrüstungsmodul (40), das ein einziges Gehäuse bildet, in dem diese Steuer- und Kontrollelemente integriert sind und das über erste elektrische Steckverbinder (58) verfügt, die auf der Vorderseite zentralisiert sind, die mit diesen Ausrüstungen verbunden sind,
- einen einteiligen Tragrahmen (41), der eine Oberseite aufweist, die mit einer Schale (45), die zweite elektrische Steckverbinder (43) aufweist, die am Boden dieser Schale angeordnet sind, die geeignet sind, mit den Bordrechnern dieses Flugzeugs verbunden zu werden, versehen ist, in die dieses Ausrüstungsmodul (41) derart installiert wird, um die Funktion dieses Ausrüstungsmoduls (41) nach dem Einstecken der ersten elektrischen Steckverbinder (58) in die zweiten elektrischen Steckverbinder (43) zu gewährleisten und die Steuerungen des Ausrüstungsmoduls und die Bordrechner zu verbinden.

2. Zentraler Pylon nach Anspruch 1, wobei die Verbindungsverkabelung des Ausrüstungsmoduls (40) eine Multiplex-Verkabelung ist.

3. Zentraler Pylon nach Anspruch 1, wobei die ersten elektrischen Steckverbinder (58), die auf der Vorderseite des Ausrüstungsmoduls (40) zentralisiert sind, in zweite elektrische Steckverbinder (43) eingesteckt sind, die am Boden der Schale (45) angeordnet sind.

4. Zentraler Pylon nach Anspruch 1, wobei der einteilige Tragrahmen (41) aus Verbundsandwich hergestellt ist.

5. Zentraler Pylon nach Anspruch 4, wobei der Verbundsandwich Nida Nomex Kohlenstoff ist.

6. Zentraler Pylon nach Anspruch 1, wobei der Rahmen Folgendes aufweist:
- mindestens zwei Befestigungspunkte (52) am unteren Teil, um ihn auf dem Boden des Cockpits zu befestigen,
- mindestens zwei Befestigungspunkte (53) am oberen Teil, um ihn an den Instrumententafeln des Cockpits zu befestigen.

7. Zentraler Pylon nach einem der vorhergehenden Ansprüche, wobei die Oberseite des einteiligen Rahmens gelenkig ist.

8. Zentraler Pylon nach Anspruch 7, wobei die Oberseite des Rahmens mit Hilfe von zwei seitlichen Zylindern gelenkig ist.

9. Zentraler Pylon nach einem der vorhergehenden Ansprüche, der in einem Flugzeug verwendet ist.

10. Flugzeug, umfassend einen zentralen Pylon nach einem der Ansprüche 1 bis 8.

## Claims

1. Aircraft cockpit centre pedestal for the attachment of control and instrumentation equipment for this aircraft, **characterised in that** the centre pedestal comprises:
- an equipment module (40) forming a simple housing integrating this control and instrumentation equipment and comprising first electrical connectors (58), centralised on the front face, connected to this equipment,
- a single-piece frame (41) comprising an upper face provided with a recess (45) comprising second electrical connectors (43) located at the bottom of the recess suited to be connected to computers onboard this aircraft, in which this equipment module (41) is installed so that the function of said equipment module (41) is realised when the first electrical connectors (58) are inserted into the second electrical connectors (43), and the controls of the equipment module and these onboard computers are connected.

2. Centre pedestal according to claim 1, in which the connection wiring of the equipment module (40) is multiplexed wiring.

3. Centre pedestal according to claim 1, in which the first electrical connectors (58), centralised on the front face of the equipment module (40), are inserted in second electrical connectors (43) installed at the bottom of the recess (45).

4. Centre pedestal according to claim 1, in which the single-piece frame (41) is made from a composite sandwich.

5. Centre pedestal according to claim 4, in which the composite sandwich is made from Nomex honeycomb carbon.

6. Centre pedestal according to claim 1, in which the frame comprises:
- at least two attachment points (52) in the lower part to fix it onto the cockpit deck,
- at least two attachment points (53) in the upper part to fix it onto the cockpit instrument panels.

7. Centre pedestal according to any one of the previous claims, in which the upper face of the single-piece frame is articulated.

8. Centre pedestal according to claim 7, in which the upper face of the frame is articulated using two lateral actuators.

9. Centre pedestal according to any one of the previous claims, which is used in an aircraft.

10. Aircraft comprising a centre pedestal according to any one of claims 1 to 8.
